# EUROPÄISCHE PATENTSCHRIFT

(11) **EP 0 617 857 B1**
(45) Veröffentlichungstag und Bekanntmachung des Hinweises auf die Patenterteilung: **28.05.1997**
(21) Anmeldenummer: 93917514.7
(22) Anmeldetag: 17.08.1993
(51) Int. Cl.: H02J 9/06

(54) **STROMVERSORGUNGSANLAGE ZUR UNTERBRECHUNGSFREIEN SPEISUNG EINER LAST VON EINEM NETZ**
POWER SUPPLY INSTALLATION FOR AN UNINTERRUPTIBLE POWER SUPPLY TO THE LOAD FROM THE MAINS
INSTALLATION D'ALIMENTATION EN COURANT POUR L'ALIMENTATION SANS COUPURE D'UNE CHARGE PAR UN RESEAU

(30) Priorität: 16.10.1992 CH 3228/92
(43) Veröffentlichungstag der Anmeldung: 05.10.1994
(73) Patentinhaber: INVERTOMATIC SA PER LA CONVERSIONE DELL'ENERGIA, CH-6595 Riazzino (CH)
(72) Erfinder: MARBACH, Filippo, CH-6805 Vira-Gambarogno (CH); XHIHA, Vllaznim, CH-6648 Minusio (CH)
(74) Vertreter: EGLI-EUROPEAN PATENT ATTORNEYS
(86) Internationale Anmeldenummer: CH9300208
(87) Internationale Veröffentlichungsnummer: WO9409545

(56) Entgegenhaltungen:
- EP-A- 0 419 015
- EP-A- 0 480 846
- BE-A- 691 194
- IEEE INDUSTRY APPICATIONS SOCIETY ANNUAL MEETING 1991 Seiten 1042 - 1046 KUBO ET AL. 'A Fully Digital Controlled UPS Using IGBT's'
- NEW ELECTRONICS.INCORPORATING ELECTRONICS TODAY Bd. 20, Nr. 10 , 12. Mai 1987 , LONDON GB Seiten 46 - 48 LEACH 'Protecting equipement with the true UPS'
- ELECTRONICS WORLD AND WIRELESS WORLD Bd. 97, Nr. 1659 , Januar 1991 , SURREY GB Seiten 78 - 81 'Right UPS for the right job'
- MESURES REGULATION AUTOMATISME Bd. 50, Nr. 8 , Mai 1981 , PARIS FR Seiten 87 - 95 CROS 'Les alimentations ininterruptibles'

## Beschreibung

Die Erfindung betrifft ein Verfahren zum Betrieb einer Stromversorgungsanlage zur unterbrechungsfreien Speisung einer Last von einem Netz, mit einem netzseitigen Umrichter, einem lastseitigen Umrichter, einer Umschalteeinheit sowie einem Energiespeicher, wobei ein Ausgang des netzseitigen Umrichters, ein Eingang des lastseitigen Umrichters und ein Anschluss des Energiespeichers miteinander verbunden sind, sowie eine Stromversorgungsanlage zur Durchführung des Betriebsverfahrens.

Ein solcher Stand der Technik ist aus der Veröffentlichung IEEE Industry Applications Society Annual Meeting 1991, Kubo et Al. "A fully digital controlled UPS using IGBT's" (Seiten 1042-1046) bekannt.

Auf dem Gebiet der statischen Notstromversorgung sind gegenwärtig vier grundsätzliche Topologien von Notstrom-Versorgungsanlagen bekannt, nämlich die unterbrechungsfreie Stromversorgungsanlagen (Online-Anlagen), die Notstromversorgungsanlagen mit Umkehrwechselrichter, die Standby-Notstromversorgungsanlagen (Offline-Anlagen) und die Notstronversorgungsanlagen mit Sättigungstransformator (Ferro-Standby-Anlagen).

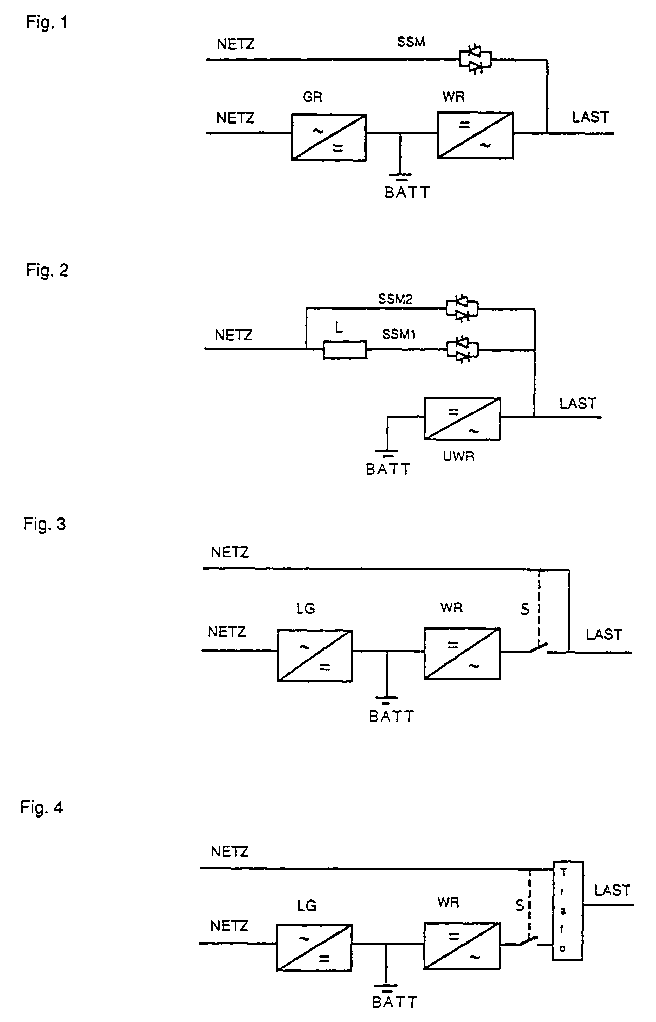

In Fig. 1 bis 4 ist dieser Stand der Technik dargestellt. Nachfolgend wird jede dieser vier Topologien kurz beschrieben.

In Fig. 1 ist eine unterbrechungsfreie Stromversorgungsanlage oder Online-Anlage dargestellt. Bei einer solchen Anlage wird im Normalbetrieb die Energie vom Netz NETZ über die Reihenschaltung eines Gleichrichters GR und eines Wechselrichters WR zur Last LAST übertragen. Bei einer Netzstörung wird die Lastspeisung automatisch und unterbrechungsfrei von einer Batterie BATT und dem Wechselrichter WR gewährleistet. Bei Überlast, lastseitigen Kurzschluss oder Störung des Wechselrichters WR wird die Last LAST automatisch und unterbrechungsfrei vom Netz NETZ über einen statischen Schalter SSM gespeist. Eine solche Anlage gewährleistet den optimalen Schutz der zu speisenden Last unabhängig von der Art der Netzstörung. Der Wirkungsgrad einer solchen Anlage hängt von der Leistung ab, er kann im unteren Leistungsbereich (bis 10kVA) bis 88%, im mittleren Leistungsbereich (von 10 bis 80kVA) zwischen 88% und 92%, und im oberen Leistungsbereich (oberhalb 80kVA) bis 94% betragen.

In Fig. 2 ist eine Notstromversorgungsanlage mit Umkehrwechselrichter dargestellt. Bei einer solchen Anlage wird im Normalbetrieb die Energie parallel vom Netz NETZ der Last LAST über eine Drossel L und einem statischen Schalter SSM1 wie auch von einem Umkehrwechselrichter UWR geliefert. Der Beitrag des Umkehrwechselrichters UWR hängt stark von der Netzqualität und vom Leistungsfaktor der Last ab, dies hat zur Folge, dass auch der Wirkungsgrad der Anlage stark von diesen Parametern variiert. Bei Netzausfall wird die Last LAST von einer Batterie BATT und vom Unkehrwechselrichter UWR gespeist. Bei Störung des Umkehrwechselrichters UWR wird die Last LAST vom Netz NETZ über einen statischen Schalter SSM2 gespeist, wobei eine Phasenverschiebung bis zu 30° zu erwarten ist. Bei optimalen Netz- und Lastverhältnissen beträgt der Wirkungsgrad einer solchen Anlage im unteren Leistungsbereich (bis 10kVA) etwa 92%, im mittleren Leistungsbereich (von 10 bis 80kVA) zwischen 92% und 94% und im oberen Leistungsbereich (oberhalb 80kVA) bis zu 96%. Bei nicht optimalen Netz- und Lastverhältnissen wie auch im Teillastbetrieb ist mit einer starken Absenkung des Wirkungsgrades zu rechnen. Eine solche Anlage ist für den dieselelektrischen Betrieb wegen der zu erwartenden Frequenzschwankungen nicht geeignet.

In Fig. 3 ist eine Standby-Notstromversorgungsanlage oder Offline-Anlage dargestellt. Bei einer solchen Anlage wird im Normalbetrieb die Energie unmittelbar vom Netz NETZ zur Last LAST übertragen. Ein Wechselrichter WR ist vorgesehen, bleibt aber während des Netzbetriebs ausgeschaltet. Bei einer Netzstörung wird der Wechselrichter WR eingeschaltet und die Last LAST wird durch einen Schalter S vom Netz NETZ auf den Wechselrichter WR umgeschaltet. Die Umschaltezeit beträgt je nach Typ der Offline-Anlage zwischen 4 und 10 ms. Solche Offline-Anlagen werden hauptsächlich im unteren Leistungsbereich (bis 5kVA) verwendet, sie sind kostengünstig und weisen eher hohe Wirkungsgrade auf (zwischen 90% und 95%).

In Fig. 4 ist eine Notstromversorgungsanlage mit Sättigungstransformator oder Ferro-Standby-Anlage dargestellt. Eine solche Anlage funktioniert ähnlich wie eine Offline-Anlage mit dem Unterschied, dass zur Beseitigung der Unterbrechung bei Umschaltung vom Netz NETZ auf den Wechselrichter WR ein ferro-resonanter Transformator TRAFO der Last LAST am Ausgang der Anlage vorgeschaltet ist. Solche Anlagen werden im unteren Leistungsbereich (bis 15kVA) verwendet, ihr Wirkungsgrad (bis 88%) ist wegen des Transformators niedriger als bei den Offline-Anlagen.

Jede dieser bekannten Topologien von Notstromversorgungsanlagen hat also ihre eigenen Vorteile, es ist aber keine Notstromversorgungsanlage bekannt, welche die Vorteile aller dieser Topologien von Notstromversorgungsanlagen unter den entsprechenden Betriebsbedingungen aufzuweisen vermag.

Ausgehend von den Vorteilen dieser bekannten Topologien von Notstromversorgungsanlagen entstand deshalb die vorliegende Erfindung einer flexiblen unterbrechungsfreien Stromversorgungsanlage zur Lösung der Aufgabe, in einer einzigen Anlage, in Abhängigkeit von den von der Last geforderten Spannungsparametern und durch Überwachung der Netzspannung und des Laststroms, die jeweils am besten geeignete Betriebsart (Netzbetrieb, Online-Betrieb oder Energiespeicher-Betrieb) hinsichtlich des optimalen Wirkungsgrads und der kleinstmöglichen Netzrückwirkungen innerhalb der geforderten Normen zu wählen und somit die Vorteile aller bekannten Topologien von Notstromversorgungsanlagen unter den entsprechenden Betriebsbedingungen in einer einzigen Anlage zu erreichen.

Diese Aufgabe wird erfindungsgemäss gelöst durch ein Verfahren nach Anspruch 1. Eine erfindungsgemässe Stromversorgungsanlage zur Durchführung dieses Verfahrens wird im Anspruch 4 definiert. Vorteilhafte Weiterbildung der erfindungsgemässen Stromversorgungsanlage und des erfindungsgemässen Betriebsverfahrens sind in den abhängigen Ansprüchen definiert.

Der technische Erfolg und die Vorteile der erfindungsgemässen Stromversorgungsanlage und des erfindungsgemässen Betriebsverfahrens sind in der nachstehenden Beschreibung unter Bezugnahme auf die Zeichnung angegeben. Es zeigen:
- Fig. 5: ein Blockschema einer erfindungsgemässen Stromversorgungsanlage; und
- Fig. 6: ein Flussdiagramm zur Erläuterung des erfindungsgemässen Betriebsverfahrens.

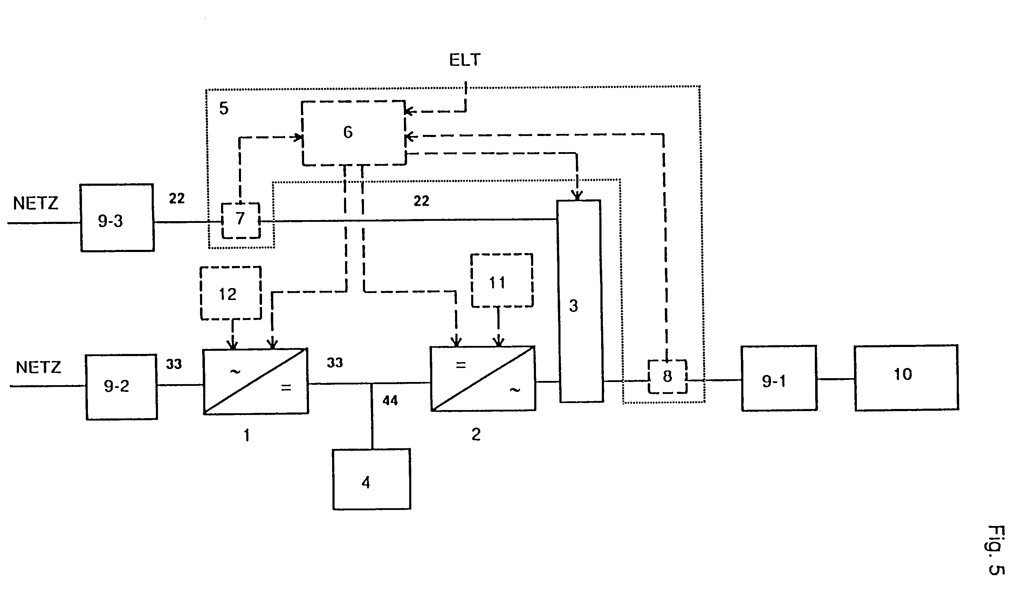

Gemäss dem in Fig. 5 gezeigten Blockschema der erfindungsgemässen Stromversorgungsanlage umfasst diese einen netzseitigen Umrichter 1, einen lastseitigen Umrichter 2, einen Energiespeicher 4, der beispielsweise eine Batterie oder auch ein Motor-Generator mit Schwungrad sein kann, und eine Umschalteeinheit 3. Ein Ausgang des netzseitigen Umrichters 1, ein Eingang des lastseitigen Umrichters 2 und ein Anschluss des Energiespeichers sind miteinander verbunden.

Zusammen sind die Umschalteeinheit 3, der netzseitige Umrichter 1 und der lastseitige Umrichter 2 dazu bestimmt und ausgebildet, wahlweise bzw. nach Bedarf eine Last 10 über drei verschiedene Schaltkreise mit Energie zu versorgen. In einer Schaltstellung "Netzbetrieb" der Stromversorgungsanlage ist die Last 10 direkt mit dem Netz NETZ verbunden. In einer Schaltstellung "Online-Betrieb" der Stromversorgungsanlage ist die Last 10 mit dem Netz NETZ über die vom Energiespeicher 4 gepufferte Reihenschaltung des netzseitigen Umrichters 1 und des lastseitigen Umrichters 2 verbunden. In einer Schaltstellung "Energiespeicher-Betrieb" der Stromversorgungsanlage ist die Last 10 mit dem Energiespeicher 4 über den lastseitigen Umrichter 2 verbunden.

Eine Kontrolleinheit 5 umfasst eine Logik 6, eine Einrichtung 7 zur Messung mindestens eines Parameters einer Spannung im Netz, beispielsweise einer Amplitude, einer Frequenz und/oder einer Wellenform-Verzerrung der Netzspannung, eine Einrichtung 8 zur Messung mindestens eines Parameters eines Stroms in der Last 10, beispielsweise einer Amplitude, einer Frequenz und/oder einer Wellenform-Verzerrung des Laststroms insbesondere zur Detektion eines Kurzschlusses in der Last 10, sowie eine Einrichtung ELT zur Eingabe von vorbestimmten Toleranzwerten in die Logik. Diese Toleranzwerte werden weiter unten erläutert.

Die Logik 6 ist mit dem netzseitigen Umrichter 1 und mit dem lastseitigen Umrichter 2 wie auch mit der Umschalteeinheit 3 verbunden, um diese zu steuern: in Abhängigkeit von den über die Einrichtung ELT eingegebenen Toleranzwerten und von den momentanen Messwerten, die von den Messeinrichtungen 7 und 8 für die Netzspannung und den Laststrom ermittelt werden, steuert die Logik 6 gleichzeitig die Umschalteeinheit 3, den netzseitigen Umrichter 1 und den lastseitigen Umrichter 2 so, dass bei den momentan herrschenden Bedingungen am Netz und an der Last eine optimale Speisung der Last im Netzbetrieb 22, im Online-Betrieb 33 oder im Energiespeicher-Betrieb 44 gewährleistet ist. Die Last 10 wird dabei kontinuierlich und unterbrechungsfrei mit elektrischer Energie versorgt, und die Umschaltung von der einen Betriebsart zur anderen erfolgt automatisch und unterbrechungsfrei durch die Stromversorgungsanlage und darin durch die Umschalteeinheit 3 und den lastseitigen Umrichter 2.

Die Kontrolleinheit 5 überwacht kontinuierlich mittels der Messeinrichtungen 7 und 8 die Netzspannung (Amplitude, Frequenz und/oder Wellenform-Verzerrung) und den Laststrom (Amplitude, Frequenz, Wellenform-Verzerrung und/oder Kurzschluss), und sie vergleicht die entsprechenden Messwerte mit den vorgegebenen Toleranzen.

Mit dem lastseitigen Umrichter 2 ist eine zusätzliche Logik 11 verbunden, die mit einer (nicht separat dargestellten) Einrichtung zur Eingabe eines vorbestimmten Leistungsfaktorwertes verbunden oder versehen ist. Mit dem netzseitigen Umrichter 1 ist eine zusätzliche Logik 12 verbunden, die ebenfalls mit einer (nicht separat dargestellten) Einrichtung zur Eingabe eines Leistungsfaktorwertes verbunden oder versehen ist. Die mit dem lastseitigen Umrichter 2 verbundene zusätzliche Logik 11 ist zur Steuerung einer Korrektur eines Leistungsfaktors des Netzes NETZ durch den lastseitigen Umrichter 2 bestimmt und ausgebildet, und die mit dem netzseitigen Umrichter 1 verbundene zusätzliche Logik 12 ist zur Steuerung einer Korrektur eines Leistungsfaktors des Netzes durch den netzseitigen Umrichter 1 bestimmt und ausgebildet. Somit kann der netzseitig geforderte Leistungsfaktor je nach Betriebsart eingestellt und eingehalten, und der optimale Wirkungsgrad bei Einhaltung der geforderten Normen in bezug auf Netzrückwirkungen erreicht werden.

Im Rahmen der Sicherung der elektromagnetischen Verträglichkeit dient ein EMV-Filter 9-1 zum Schutz der Last vor energiereichen und schnellen Transienten, und EMV-Filter 9-2 und 9-3 schützen andere an das Netz NETZ angeschlossene Lasten von HF-Störungen, die von der Last 10 bzw. vom lastseitigen Umrichter 2 verursacht würden.

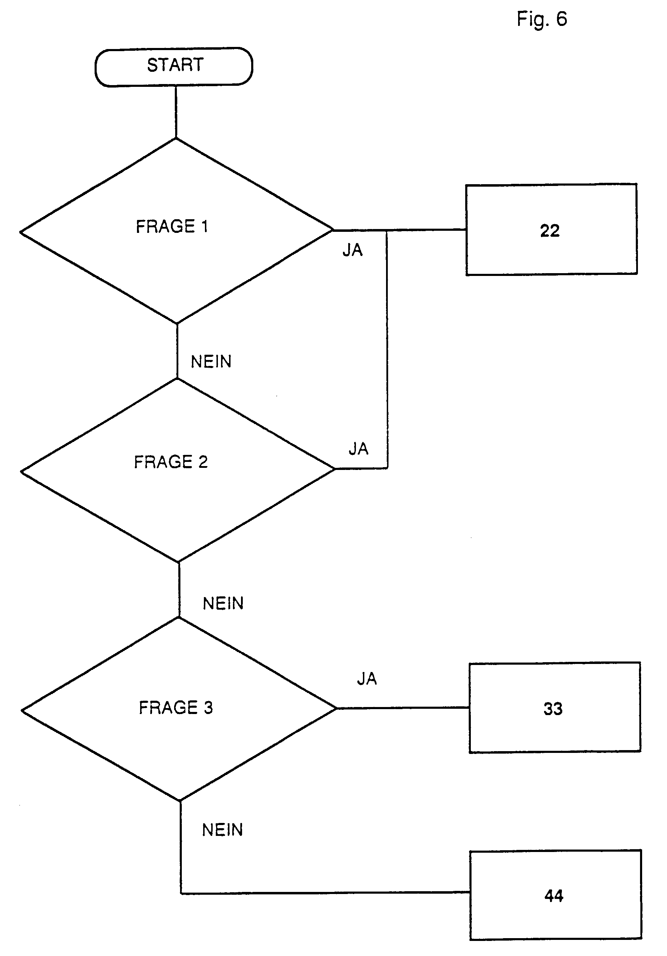

Die drei Betriebsarten der Stromversorgungsanlage bzw. das Verfahren zum ihrem Betrieb wie auch die Umschaltung zwischen den Betriebsarten werden nun unter Bezugnahme auf das in Fig. 6 dargestellte Flussdiagramm beschrieben.

Beim Betrieb der Anlage erfolgt in den Messeinrichtungen 7 und 8 laufend die Messung von Parametern der Netzspannung und des Laststroms. Die von der Last 10 geforderten Toleranzen ELT in bezug auf die Netzspannung (Amplitude, Frequenz und/oder Wellenform-Verzerrung) können in der Logik 6 auf die gewünschten Werte eingestellt werden.

Gleich nach dem Start (START) werden der gemessene bzw. die gemessenen Parameter der Netzspannung (Amplitude, Frequenz und/oder Wellenform-Verzerrung) in der Logik 6 mit den entsprechenden, in Abhängigkeit von der Last gewählten Toleranzwerten verglichen (FRAGE 1).

Bei Einhaltung (FRAGE 1 => JA) der in Abhängigkeit von der Last gewählten Toleranzwerte durch die Netzspannung steuert die Logik 6 gleichzeitig die Umschalteeinheit 3, den netzseitigen Umrichter 1 und den lastseitigen Umrichter 2 zur Speisung der Last 10 direkt vom Netz NETZ, d.h. im Netzbetrieb (22). Die Stromversorgungsanlage arbeitet also im Netzbetrieb, solange die gemessenen Parameter der Netzspannung innerhalb der von der Last geforderten Toleranzen liegen.

Der netzseitige Umrichter 1 wird während des Netzbetriebs (22) von der Logik 6 abgeschaltet, er generiert somit weder Netzwirkungen noch Verluste.

Der lastseitige Umrichter 2 wird während des Netzbetriebs (22) von der Logik 6 in Betrieb gehalten und von der Logik 11 so gesteuert, dass der Leistungsfaktor des Netzes auf den der Logik 11 eingegebenen vorbestimmten Leistungsfaktorwert korrigiert wird. Somit wirkt der lastseitige Umrichter 2 als Blindleistungskompensator (es können Leistungsfaktoren bis ca. 1 erreicht werden) und gleichzeitig als Ladegerät zur Erhaltung der Schwebeladespannung des Energiespeichers 4.

Die Netzrückwirkungen sind somit vom Lastbild im wesentlichen unabhängig.

Bei linearen Lasten mit cos ϕ = 1 sind die Netzrückwirkungen vernachlässigbar klein, und es ist deshalb keine Blindleistungskompensation durch den lastseitigen Umrichter 2 notwendig. So können Wirkungsgrade der gesamten Stromversorgungsanlage bis zu 99% erreicht werden. In der Praxis sind jedoch die empfindlichen Lasten meistens nichtlinear mit Leistungsfaktoren ≠ 1: dann kann der lastseitige Umrichter 2 zur Verminderung von Netzrückwirkungen als Blindleistungskompensator verwendet werden, aber je mehr durch den lastseitigen Umrichter 2 kompensiert wird, desto mehr sinkt der Wirkungsgrad der gesamten Stromversorgungsanlage. Es ist also ein Kompromiss zwischen der Einhaltung der Vorschriften in bezug auf Netzrückwirkungen und der Erreichung des optimalen Wirkungsgrads notwendig. Dieser Kompromiss ist vom Fall zu Fall zu treffen, da die Netzverhältnisse und die Lastarten von Einsatzort zu Einsatzort verschieden sind. Durch die Möglichkeit der Einstellung des Leistungsfaktors in der Logik 11 kann eine Lösung mit optimalem Wirkungsgrad für den gegebenen Einsatzort der Stromversorgungsanlage (gegebene Netzverhältnisse und Verbraucherart) in Abhängigkeit von den einzuhaltenden Vorschriften bezüglich Netzrückwirkungen gefunden werden.

Bei Nicht-Einhaltung (FRAGE 1 => NEIN) der in Abhängigkeit von der Last gewählten Toleranzwerte durch die Netzspannung werden der gemessene bzw. die gemessenen Parameter des Laststroms (Amplitude, Frequenz, Wellenform-Verzerrung und/oder Xurzschluss) in der Logik 6 mit den entsprechenden, auf den Laststrom bezogenen Toleranzwerten verglichen (FRAGE 2).

Bei gleichzeitiger Nicht-Einhaltung der auf den Laststrom bezogenen Toleranzwerte durch den Laststrom (FRAGE 1 => IN und FRAGE 2 => JA), insbesondere bei Detektion von Kurzschluss, steuert die Logik 6 gleichzeitig die Umschalteeinheit 3, den netzseitigen Umrichter 1 und den lastseitigen Umrichter 2 wiederum zur Speisung der Last 10 direkt vom Netz NETZ, d.h. im Netzbetrieb (22). Die Stromversorgungsanlage arbeitet im Netzbetrieb, solange die auf den Laststrom bezogenen Toleranzwerte nicht eingehalten werden bzw. ein Kurzschluss vorliegt.

Bei gleichzeitiger Einhaltung der auf den Laststrom bezogenen Toleranzwerte durch den Laststrom (FRAGE 1 => NEIN und FRAGE 2 => NEIN) werden der gemessene bzw. die gemessenen Parameter der Netzspannung (Amplitude, Frequenz und/oder Wellenform-Verzerrung) in der Logik 6 mit den entsprechenden, in Abhängigkeit von dem netzseitigen Umrichter gewählten Toleranzwerten verglichen (FRAGE 3).

Bei gleichzeitiger Einhaltung der in Abhängigkeit von dem netzseitigen Umrichter gewählten Toleranzwerte durch die Netzspannung (FRAGE 1 => NEIN und FRAGE 2 => NEIN und FRAGE 3 => JA) steuert die Logik 6 gleichzeitig die Umschalteeinheit 3, den netzseitigen Umrichter 1 und den lastseitigen Umrichter 2 zur Speisung der Last 10 vom Netz NETZ über die vom Energiespeicher 4 gepufferte Reihenschaltung des netzseitigen Umrichters 1 und des lastseitigen Umrichters 2, d.h. im Online-Betrieb (33). Die Stromversorgungsanlage arbeitet also im Online-Betrieb, sobald und solange die gemessenen Parameter der Netzspannung ausserhalb der von der Last geforderten Toleranzen, aber innerhalb der in Abhängigkeit von dem netzseitigen Umrichter gewählten Toleranzwerte liegen, und kein Kurzschluss an der Last detektiert wird.

Dabei erfolgt die Umschaltung vom Netzbetrieb (22) zum Online-Betrieb (33) der Stromversorgungsanlage automatisch und unterbrechungsfrei. Der lastseitige Umrichter 2 wird während des Online-Betriebs (33) von der Logik 6 in Betrieb gehalten und von der Logik 11 so gesteuert, dass er als Spannungsquelle mit stabiler Spannungsamplitude und Spannungsfrequenz auf der Netzfrequenz (beispielsweise 50Hz) wirkt. Der netzseitige Umrichter 1 wird von der Logik 6 in Betrieb gehalten und von der Logik 12 so gesteuert, dass er als Gleichrichter und zugleich als Blindleistungskompensator mit einem über die Logik 12 einstellbaren Leistungsfaktor wirkt. Der betreffende Leistungsfaktor kann fast 1 erreichen, so dass die Netzrückwirkungen innerhalb der von den Vorschriften erforderten Grenzwerten liegen können.

Da die Last 10 über die Reihenschaltung des netzseitigen Umrichters 1 und des lastseitigen Umrichter 2 gespeist ist, wird der Wirkungsgrad der gesamten Stromversorgungsanlage je nach dem Blindleistungskompensationsgrad durch den netzseitigen Umrichter 1 und dem Belastungsgrad des lastseitigen Umrichters 2 im allgemeinen im Bereich zwischen 88% und 94% liegen.

Sobald die Parameter der Netzspannung in den Bereich der in Abhängigkeit von der Last 10 gewählten Toleranzwerte zurückkommen (FRAGE 1 => JA), wird die Last 10 von der Stromversorgungsanlage wiederum unterbrechungsfrei und automatisch auf Netzbetrieb (22) umgeschaltet.

Bei Nicht-Einhaltung der Abhängigkeit von dem netzseitigen Umrichter gewählten Toleranzwerte durch die Netzspannung, insbesondere bei Netzausfall, (FRAGE 3 => NEIN) steuert die Logik 6 gleichzeitig die Umschalteeinheit 3, den netzseitigen Umrichter 1 und den lastseitigen Umrichter 2 zur unterbrechungsfreien Speisung der Last 10 vom Energiespeicher 4 über den lastseitigen Umrichter 2, d.h. im Energiespeicher-Betrieb (44). Die Energie zur Speisung der Last 10 wird dem Energiespeicher 4 entnommen und über den lastseitigen Umrichter 2, der für die Last 10 als Spannungsquelle mit konstanter Amplitude und Frequenz (beispielsweise 220V 50Hz) wirkt, übertragen.

Der netzseitige Umrichter 1 wird während des Energiespeicher-Betriebs (44) von der Logik 6 abgeschaltet, da das Netz nicht vorhanden ist, er generiert somit keine Verluste.

Wenn in Zusammenhang mit dem Netzausfall ein Notstromaggregat, beispielsweise ein Dieselaggregat eingeschaltet wird, schaltet die Logik 6 den netzseitigen Umrichter 1 automatisch ein, die Stromversorgungsanlage arbeitet somit wieder im On-line-Betrieb (33) und der Energiespeicher 4 wird von weiterer Entladung geschont. Eventuelle Frequenzschwankungen des Dieselaggregats gelangen nicht zur Last, und durch die von der Logik 12 einstellbare Blindleistungskompensation des netzseitigen Umrichters 1 werden die Netzrückwirkungen gering gehalten.

Der Grundgedanke der erfindungsgemässen flexiblen unterbrechungsfreien Stromversorgungsanlage liegt darin, bei dauernder Erfüllung der vorgegebenen (geforderten) Lastanforderungen solange wie möglich die Netzquelle auszunützen (Netzbetrieb), damit langfristig höchste Wirkungsgradwerte erreicht werden.

Durch die Einstellbarkeit der Leistungsfaktor-Korrektur in der Logik 11 für den lastseitigen Umrichter 2 und in der Logik 12 für den netzseitigen Umrichter 1 kann der Wirkungsgrad weiter, unter Berücksichtigung der gegebenen Vorschriften bezüglich Netzrückwirkungen und Lastart (Lastbild), feiner optimiert werden.

Bei "guten" Netzverhältnissen, so wie man sie in Westeuropa findet, wird die erfindungsgemässe flexible unterbrechungsfreie Stromversorgungsanlage durch die Kontrolleinheit 5 hauptsächlich auf Netzbetrieb (22) gesteuert, nur selten auf Online-Betrieb (33), und nur ausnahmsweise in Energiespeicher-Betrieb (44). Bei "mittelmässig-guten" Netzverhältnissen wird die Last 10 öfter vom Netzbetrieb (22) auf Online-Betrieb (33) und umgekehrt geschaltet. Bei "schlechten" Netzverhältnissen wird die Last 10 häufiger im Online-Betrieb als im Netzbetrieb (22) arbeiten.

Es ist zudem möglich, die Betriebsart im vorhinein zu definieren. Wenn im vorhinein bekannt ist, dass die Netzverhältnisse schlecht sind bzw. sein werden, kann die Logik 6 so programmiert werden, dass der Online-Betrieb (33) als Hauptbetrieb gilt, während der Netzbetrieb (22) dann zum Hilfsbetrieb wird.

## Patentansprüche

1. Verfahren zum Betrieb einer Stromversorgungsanlage zur unterbrechungsfreien Speisung einer Last (10) von einem Netz (NETZ), mit einem netzseitigen Umrichter (1), einem lastseitigen Umrichter (2), einer Umschalteeinheit (3) sowie einem Energiespeicher (4), wobei ein Ausgang des netzseitigen Umrichters (1), ein Eingang des lastseitigen Umrichters (2) und ein Anschluss des Energiespeichers (4) miteinander verbunden sind,
sowie mit einer Kontrolleinheit (5) mit einer Logik (6), einer Einrichtung (7) zur Messung mindestens eines Parameters einer Spannung im Netz (NETZ), einer Einrichtung (8) zur Messung mindestens eines Parameters eines Stroms in der Last (10) und einer Einrichtung (ELT) zur Eingabe von vorbestimmten Toleranzwerten in die Logik (6), wobei die Logik (6) mit den beiden Umrichtern (1,2) verbunden ist, um diese zu steuern, und
wobei die Umschalteeinheit (3) zur automatisch gewählten Speisung der Last (10) direkt vom Netz (NETZ), vom Netz (NETZ) über die vom Energiespeicher (4) gepufferte Reihenschaltung der Umrichter (1,2) oder vom Energiespeicher (4) über den lastseitigen Umrichter (2) dient
**gekennzeichnet durch** die periodisch wiederholte Abfolge der Verfahrensschritte von:
Messung mindestens eines Parameters der Netzspannung und Vergleich des gemessenen Parameters bzw. der gemessenen Parameter der Netzspannung mit entsprechenden, vorbestimmten, in Abhängigkeit von der Last gewählten Toleranzwerten;
bei Einhaltung der in Abhängigkeit von der Last gewählten Toleranzwerte durch die Netzspannung, Steuerung der Umschalteeinheit und der Umrichter zur Speisung der Last direkt vom Netz (22);
bei Nichteinhaltung der in Abhängigkeit von der Last gewählten Toleranzwerte durch die Netzspannung, Messung mindestens eines Parameters des Laststroms und Vergleich des gemessenen Parameters bzw. der gemessenen Parameter des Laststroms mit entsprechenden, vorbestimmten, auf den Laststrom bezogenen Toleranzwerten;
bei Nichteinhaltung der auf den Laststrom bezogenen Toleranzwerte durch den Laststrom, Steuerung der Umschalteeinheit und der Umrichter zur Speisung der Last direkt vom Netz (22);
bei Einhaltung der auf den Laststrom bezogenen Toleranzwerte durch den Laststrom, Messung mindestens eines Parameters einer Netzspannung und Vergleich des gemessenen Parameters bzw. der gemessenen Parameter der Netzspannung mit entsprechenden, vorbestimmten, in Abhängigkeit von dem netzseitigen Umrichter gewählten Toleranzwerten;
bei Einhaltung der in Abhängigkeit von dem netzseitigen Umrichter gewählten Toleranzwerte durch die Netzspannung, Steuerung der Umschalteeinheit und der Umrichter zur Speisung der Last vom Netz über die vom Energiespeicher gepufferte Reihenschaltung der Umrichter (33); und
bei Nichteinhaltung der in Abhängigkeit von dem netzseitigen Umrichter gewählten Toleranzwerte durch die Netzspannung, Steuerung der Umschalteeinheit und der Umrichter zur Speisung der Last vom Energiespeicher über den lastseitigen Umrichter (44).

2. Verfahren nach Anspruch 1, gekennzeichnet durch die Messung der Netzspannung bzw. des Laststroms hinsichtlich ihrer bzw. seiner Amplitude, Frequenz und/oder Wellenform-Verzerrung.

3. Verfahren nach Anspruch 1 zum Betrieb der Stromversorgungsanlage nach Anspruch 6, dadurch gekennzeichnet, dass,
im Falle der Steuerung der Umschalteeinheit und der Umrichter zur Speisung der Last direkt vom Netz (22) aufgrund der Einhaltung der in Abhängigkeit von der Last gewählten Toleranzwerte durch die Netzspannung, die mit dem lastseitigen Umrichter (2) verbundene zusätzliche Logik (11) in Abhängigkeit von dem ihr eingegebenen vorbestimmten Leistungsfaktorwert den lastseitigen Umrichter (2) so steuert, dass der Leistungsfaktor des Netzes (NETZ) auf den eingegebenen vorbestimmten Leistungsfaktorwert korrigiert wird,
und im Falle der Steuerung der Umschalteeinheit und der Umrichter zur Speisung der Last vom Netz (33) über die vom Energiespeicher gepufferte Reihenschaltung der Umrichter aufgrund der Einhaltung der für den netzseitigen Umrichter gewählten Toleranzwerte durch die Netzspannung, die mit dem netzseitigen Umrichter (1) verbundene zusätzliche Logik (12) in Abhängigkeit von dem ihr eingegebenen vorbestimmten Leistungsfaktorwert den netzseitigen Umrichter (1) so steuert, dass der Leistungsfaktor des Netzes (NETZ) auf den eingegebenen vorbestimmten Leistungsfaktorwert korrigiert wird.

4. Stromversorgungsanlage zur Durchführung des Betriebsverfahrens nach Anspruch 1 zur unterbrechungsfreien Speisung einer Last (10) von einem Netz (NETZ), mit einem netzseitigen Umrichter (1), einem lastseitigen Umrichter (2), einer Umschalteeinheit (3) sowie einem Energiespeicher (4), wobei ein Ausgang des netzseitigen Umrichters (1), ein Eingang des lastseitigen Umrichters (2) und ein Anschluss des Energiespeichers (4) miteinander verbunden sind,
sowie mit einer Kontrolleinheit (5) mit einer Logik (6), einer Einrichtung (7) zur Messung mindestens eines Parameters einer Spannung im Netz (NETZ), einer Einrichtung (8) zur Messung mindestens eines Parameters eines Stroms in der Last (10) und einer Einrichtung (ELT) zur Eingabe von vorbestimmten Toleranzwerten in die Logik (6), wobei die Logik (6) mit den beiden Umrichtern (1,2) verbunden ist, um diese zu steuern, und
wobei die Umschalteeinheit (3) zur automatisch gewählten Speisung der Last (10) direkt vom Netz (NETZ), vom Netz (NETZ) über die vom Energiespeicher (4) gepufferte Reihenschaltung der Umrichter (1,2) oder vom Energiespeicher (4) über den lastseitigen Umrichter (2) dient, und wobei die Kontrolleinheit (5) mit der Logik (6) dazu ausgebildet ist, in Abhängigkeit von den eingegebenen Toleranzwerten und von momentanen Messungen des mindestens einen Parameters der Netzspannung und des mindestens einen Parameters des Laststroms die Umschalteeinheit (3) und die Umrichter (1,2) so zu betätigen, dass bei den momentan herrschenden Bedingungen am Netz (NETZ) und an der Last (10) eine optimale Speisung der Last (10) gewährleistet ist und zudem solange wie möglich die Netzquelle ausgenützt ist um langfristig höchste Wirkungsgradwerte zu erreichen was die Kontrolleinheit (5) dadurch erreicht, daß sie die Verfahrensschritte des Verfahrens nach Anspruch 1 ausführt.

5. Stromversorgungsanlage nach Anspruch 4, dadurch gekennzeichnet, dass die Einrichtung (7,8) zur Messung des mindestens einen Parameters der Netzspannung bzw. des Laststroms zur Messung einer Amplitude, einer Frequenz und/oder einer Wellenform-Verzerrung der Netzspannung bzw. des Laststroms ausgebildet ist.

6. Stromversorgungsanlage nach Anspruch 4 oder 5, gekennzeichnet durch eine mit dem lastseitigen Umrichter (2) verbundene zusätzliche Logik (11), eine Einrichtung zur Eingabe eines vorbestimmten Leistungsfaktorwertes in die mit dem lastseitigen Umrichter (2) verbundene zusätzliche Logik (11), eine mit dem netzseitigen Umrichter (1) verbundene zusätzliche Logik (12) und eine Einrichtung zur Eingabe eines Leistungsfaktorwertes in die mit dem netzseitigen Umrichter (1) verbundene zusätzliche Logik (12), wobei die mit dem lastseitigen Umrichter (2) verbundene zusätzliche Logik (11) zur Steuerung einer Korrektur eines Leistungsfaktors des Netzes (NETZ) durch den lastseitigen Umrichter (2) und die mit dem netzseitigen Umrichter (1) verbundene zusätzliche Logik (12) zur Steuerung einer Korrektur eines Leistungsfaktors des Netzes (NETZ) durch den netzseitigen Umrichter (1) bestimmt und ausgebildet ist.

## Claims

1. Method for operating a power supply installation for the uninterruptible feeding of a load (10) from a mains (MAINS), having a mains-side converter (1), a load-side converter (2), a changeover unit (3) as well as an energy store (4), an output of the mains-side converter (1), an input of the load-side converter (2) and a terminal of the energy store (4) being connected to one another,
and also having a control unit (5) having a logic arrangement (6), a device (7) for measuring at least one parameter of a voltage in the mains (MAINS), a device (8) for measuring at least one parameter of a current in the load (10), and a device (ELT) for inputting predetermined tolerance values into the logic arrangement (6), the logic arrangement (6) being connected to the two converters (1, 2) in order to control them, and
the changeover unit (3) serving for the automatically selected feeding of the load (10) directly from the mains (MAINS), from the mains (MAINS) via the series circuit formed by the converters (1, 2), which series circuit is buffered by the energy store (4), or from the energy store (4) via the load-side converter (2), characterized by the periodically repeated sequence of the following method steps:
measurement of at least one parameter of the mains voltage and comparison of the measured parameter or of the measured parameters of the mains voltage with corresponding, predetermined tolerance values which are selected as a function of the load;
in the event that the mains voltage conforms to the tolerance values selected as a function of the load, control of the changeover unit and of the converters for the purpose of feeding the load directly from the mains (22);
in the event that the mains voltage does not conform to the tolerance values selected as a function of the load, measurement of at least one parameter of the load current and comparison of the measured parameter or of the measured parameters of the load current with corresponding, predetermined tolerance values referring to the load current;
in the event that the load current does not conform to the tolerance values referring to the load current, control of the changeover unit and of the converters for the purpose of feeding the load directly from the mains (22);
in the event that the load current conforms to the tolerance values referring to the load current, measurement of at least one parameter of a mains voltage and comparison of the measured parameter or of the measured parameters of the mains voltage with corresponding, predetermined tolerance values which are selected as a function of the mains-side converter; in the event that the mains voltage conforms to the tolerance values selected as a function of the mains-side converter, control of the changeover unit and of the converters for the purpose of feeding the load from the mains via the series circuit formed by the converters (33), which series circuit is buffered by the energy store; and
in the event that the mains voltage does not conform to the tolerance values selected as a function of the mains-side converter, control of the changeover unit and of the converters for the purpose of feeding the load from the energy store via the load-side converter (44).

2. Method according to Claim 1, characterized by the measurement of the mains voltage and of the load current in terms of its respective amplitude frequency and/or waveform distortion.

3. Method according to Claim 1 for operating the power supply installation according to Claim 6, characterized in that
in the event of the control of the changeover unit and of the converters for the purpose of feeding the load directly from the mains (22) due to the fact that the mains voltage conforms to the tolerance values selected as a function of the load, the additional logic arrangement (11), which is connected to the load-side converter (2), controls the load-side converter (2), as a function of the predetermined power factor value which has been input into the said additional logic arrangement (11), in such a way that the power factor of the mains (MAINS) is corrected to the input, predetermined power factor value,
and in the event of the control of the changeover unit and of the converters for the purpose of feeding the load from the mains (33) via the series circuit formed by the converters, which series circuit is buffered by the energy store, due to the fact that the mains voltage conforms to the tolerance values selected for the mains-side converter, the additional logic arrangement (12), which is connected to the mains-side converter (1) controls the mains-side converter (1), as a function of the predetermined power factor value which has been input into the said additional logic arrangement (12) in such a way that the power factor of the mains (MAINS) is corrected to the input, predetermined power factor value.

4. Power supply installation for carrying out the operating method according to Claim 1 for the uninterruptible feeding of a load (10) from a mains (MAINS), having a mains-side converter (1), a load-side converter (2), a changeover unit (3) as well as an energy store (4), an output of the mains-side converter (1), an input of the load-side converter (2) and a terminal of the energy store (4) being connected to one another,
and also having a control unit (5) having a logic arrangement (6), a device (7) for measuring at least one parameter of a voltage in the mains (MAINS), a device (8) for measuring at least one parameter of a current in the load (10), and a device (ELT) for inputting predetermined tolerance values into the logic arrangement (6), the logic arrangement (6), being connected to the two converters (1, 2) in order to control them, and
the changeover unit (3) serving for the automatically selected feeding of the load (10) directly from the mains (MAINS), from the mains (MAINS) via the series circuit formed by the converters (1, 2), which series circuit is buffered by the energy store (4), or from the energy store (4) via the load-side converter (2), and the control unit (5) having the logic arrangement (6) being designed to actuate the changeover unit (3) and the converters (1, 2) as a function of the input tolerance values and of instantaneous measurements of the at least one parameter of the mains voltage and of the at least one parameter of the load current, in such a way that optimum feeding of the load (10) is ensured for the instantaneously prevailing conditions at the mains (MAINS) and at the load (10) and, in addition, the mains source is utilized for as long as possible in order to achieve maximum efficiencies over a long period of time, which the control unit (5) achieves by carrying out the method steps of the method according to Claim 1.

5. Power supply installation according to Claim 4, characterized in that the device (7, 8) for measuring the at least one parameter of the mains voltage and of the load current, respectively, is designed to measure an amplitude, a frequency and/or a waveform distortion of the mains voltage and of the load current, respectively.

6. Power supply installation according to Claim 4 or 5, characterized by an additional logic arrangement (11), which is connected to the load-side converter (2), a device for inputting a predetermined power factor value into the additional logic arrangement (11) connected to the load-side converter (2), an additional logic arrangement (12), which is connected to the mains-side converter (1), and a device for inputting a power factor value into the additional logic arrangement (12) connected to the mains-side converter (1), the additional logic arrangement (11) connected to the load-side converter (2) being intended and designed to control correction of a power factor of the mains (MAINS) by the load-side converter (2), and the additional logic arrangement (12) connected to the mains-side converter (1) being intended and designed to control correction of a power factor of the mains (MAINS) by the mains-side converter (1).

## Revendications

1. Procédé pour le mode de fonctionnement d'un groupe d'alimentation destiné à l'alimentation sans interruption d'une charge (10) à partir d'un réseau (RESEAU), comprenant un convertisseur statique de fréquence (1) côté réseau, un convertisseur statique de fréquence (2) côté charge, une unité de commutation (3), ainsi qu'un accumulateur d'énergie (4), dans lequel une sortie du convertisseur statique de fréquence (1) côté réseau, une entrée du convertisseur statique de fréquence (2) côté charge et un raccord de l'accumulateur d'énergie (4) sont reliés l'un à l'autre,
et comprenant une unité de contrôle (5) équipée d'une logique (6), d'un mécanisme (7) pour mesurer au moins un paramètre d'une tension dans le réseau (RESEAU), d'un mécanisme (8) pour mesurer au moins un paramètre d'un courant dans la charge (10) et d'un mécanisme (ELT) pour entrer des valeurs de tolérance prédéterminées dans la logique (6), la logique (6) étant reliée aux deux convertisseurs statiques de fréquence (1, 2) à des fins de commande de ces derniers, et
dans lequel l'unité de commutation (3) sert à l'alimentation sélectionnée de manière automatique de la charge (10) directement à partir du réseau (RESEAU), à partir du réseau (RESEAU) via le montage en série des convertisseurs statiques de fréquence (1, 2) couplé en tampon à l'aide de l'accumulateur d'énergie (4), ou encore à partir de l'accumulateur d'énergie (4) via le convertisseur statique de fréquence (2) côté charge,
caractérisé par la succession périodiquement répétée des étapes opératoires consistant à:
mesurer au moins un paramètre de la tension de réseau et comparer le paramètre mesuré, respectivement les paramètres mesurés de la tension de réseau à des valeurs de tolérance correspondantes, prédéterminées, sélectionnées en fonction de la charge;
en cas de maintien des valeurs de tolérance sélectionnées en fonction de la charge à travers la tension du réseau, commander l'unité de commutation et les convertisseurs statiques de fréquence pour alimenter la charge directement à partir du réseau (22);
en cas de non-maintien des valeurs de tolérance sélectionnées en fonction de la charge à travers la tension de réseau, mesurer au moins un paramètre du courant de charge et comparer le paramètre mesuré, respectivement les paramètres mesurés du courant de charge à des valeurs de tolérance correspondantes prédéterminées, rapportées au courant de charge;
en cas de non-maintien des valeurs de tolérance rapportées au courant de charge à travers le courant de charge, commander l'unité de commutation et les convertisseurs statiques de fréquence pour alimenter la charge directement à partir du réseau (22);
en cas de maintien des valeurs de tolérance rapportées au courant de charge à travers le courant de charge, mesurer au moins un paramètre d'une tension de réseau et comparer le paramètre mesuré, respectivement les paramètres mesurés de la tension de réseau à des valeurs de tolérance correspondantes prédéterminées sélectionnées en fonction du convertisseur statique de fréquence côté réseau;
en cas de maintien des valeurs de tolérance sélectionnées en fonction du convertisseur statique de fréquence côté réseau à travers la tension de réseau, commander l'unité de commutation et les convertisseurs statiques de fréquence pour alimenter la charge à partir du réseau via le montage en série des convertisseurs statiques de fréquence (33) couplé en tampon à l'aide de l'accumulateur d'énergie; et
en cas de non-maintien des valeurs de tolérance sélectionnées en fonction du convertisseur statique de fréquence côté réseau, à travers la tension de réseau, commander l'unité de commutation et les convertisseurs statiques de fréquence pour alimenter la charge à partir de l'accumulateur d'énergie via le convertisseur statique de fréquence (44) côté charge.

2. Procédé selon la revendication 1, caractérisé par la mesure de la tension de réseau, respectivement du courant de charge en ce qui concerne leur amplitude, leur fréquence et/ou la distorsion de leur forme d'onde.

3. Procédé selon la revendication 1, pour le mode de fonctionnement du groupe d'alimentation selon la revendication 6, caractérisé en ce que
dans le cas d'une commande de l'unité de commutation et des convertisseurs statiques de fréquence pour alimenter la charge directement à partir du réseau (22) sur base du maintien des valeurs de tolérance sélectionnées en fonction de la charge à travers la tension de réseau, la logique supplémentaire (11) reliée au convertisseur statique de fréquence (2) côté charge commande le convertisseur statique de fréquence (2) côté charge en fonction de la valeur du facteur de puissance prédéterminée mémorisée dans ce dernier, de telle sorte que le facteur de puissance du réseau (RESEAU) est rectifié en fonction de la valeur du facteur de puissance prédéterminée mémorisée,
et dans le cas d'une commande de l'unité de commutation et des convertisseurs statiques de fréquence pour alimenter la charge à partir du réseau (33) via le montage en série des convertisseurs statiques de fréquence couplé en tampon à l'aide de l'accumulateur d'énergie, sur base du maintien des valeurs de tolérance sélectionnées pour le convertisseur statique de fréquence côté réseau à travers la tension de réseau, la logique supplémentaire (12) reliée au convertisseur statique de fréquence (1) côté réseau commande le convertisseur statique de fréquence (1) côté réseau en fonction de la valeur du facteur de puissance prédéterminée mémorisée dans ce dernier, de telle sorte que le facteur de puissance du réseau (RESEAU) est rectifié en fonction de la valeur du facteur de puissance prédéterminée mémorisée.

4. Groupe d'alimentation pour la mise en oeuvre du procédé de mode de fonctionnement selon la revendication 1, pour l'alimentation sans interruption d'une charge (10) à partir d'un réseau (RESEAU), comprenant un convertisseur statique de fréquence (1) côté réseau, un convertisseur statique de fréquence (2) côté charge, une unité de commutation (3), ainsi qu'un accumulateur d'énergie (4), dans lequel une sortie du convertisseur statique de fréquence (1) côté réseau, une entrée du convertisseur statique de fréquence (2) côté charge et un raccord de l'accumulateur d'énergie (4) sont reliés l'un à l'autre,
et comprenant une unité de contrôle (5) équipée d'une logique (6), d'un mécanisme (7) pour mesurer au moins un paramètre d'une tension dans le réseau (RESEAU), d'un mécanisme (8) pour mesurer au moins un paramètre d'un courant dans la charge (10) et d'un mécanisme (ELT) pour entrer des valeurs de tolérance prédéterminées dans la logique (6), la logique (6) étant reliée aux deux convertisseurs statiques de fréquence (1, 2) à des fins de commande de ces derniers, et dans lequel l'unité de commutation (3) sert à l'alimentation sélectionnée de manière automatique de la charge (10) directement à partir du réseau (RESEAU), à partir du réseau (RESEAU) via le montage en série des convertisseurs statiques de fréquence (1, 2) couplé en tampon à l'aide de l'accumulateur d'énergie (4), ou encore à partir de l'accumulateur d'énergie (4) via le convertisseur statique de fréquence (2) côté charge, et dans lequel l'unité de contrôle (5) conjointement avec la logique (6) est réalisée dans le but de commander l'unité de commutation (3) et les convertisseurs statiques de fréquence (1, 2), en fonction des valeurs de tolérance mémorisées et des mesures instantanées du ou des paramètres de la tension de réseau et du ou des paramètres du courant de charge, de telle sorte que, dans les conditions régnant momentanément dans le réseau (RESEAU) et dans la charge (10), on garantit une alimentation optimale de la charge (10) et on exploite en outre la source de réseau aussi longtemps que possible pour atteindre des valeurs de rendement très élevées à long terme, ce que réalise l'unité de contrôle (5) en passant par les étapes opératoires du procédé selon la revendication 1.

5. Groupe d'alimentation selon la revendication 4, caractérisé en ce que le mécanisme (7, 8) est réalisé pour mesurer le ou les paramètres de la tension de réseau, respectivement du courant de charge; autrement dit pour mesurer une amplitude, une fréquence et/ou une distorsion de la forme d'onde de la tension de réseau, respectivement du courant de charge.

6. Groupe d'alimentation selon la revendication 4 ou 5, caractérisé par une logique supplémentaire (11) reliée au convertisseur statique de fréquence (2) côté charge, par un mécanisme pour entrer une valeur de facteur de puissance prédéterminée dans la logique supplémentaire (11) reliée au convertisseur statique de fréquence (2) côté charge, par une logique supplémentaire (12) reliée au convertisseur statique de fréquence (1) côté réseau et par un mécanisme pour entrer une valeur de facteur de puissance dans la logique supplémentaire (12) reliée au convertisseur statique de fréquence (1) côté réseau, dans lequel la logique supplémentaire (11) reliée au convertisseur statique de fréquence (2) côté charge est destinée et réalisée pour commander une rectification d'un facteur de puissance du réseau (RESEAU) via le convertisseur statique de fréquence (2) côté charge, et la logique supplémentaire (12) reliée au convertisseur statique de fréquence (1) côté réseau est destinée et réalisée pour commander une rectification d'un facteur de puissance du réseau (RESEAU) via le convertisseur statique de fréquence (1) côté réseau.
